# DEMANDE DE BREVET EUROPEEN

(11) **EP 2 466 443 A1**
(43) Date de publication de la demande: **20.06.2012**
(21) Numéro de dépôt: 11192068.2
(22) Date de dépôt: 06.12.2011
(51) Int. Cl.: G06F 3/048

(54) **Traitement de données d'interface graphique perfectionné.**

(30) Priorité: 14.12.2010 FR 1060491
(71) Demandeur: France Telecom, 75015 Paris (FR)
(72) Inventeur: Maschio-Esposito, Eric, 14790 Fontaine-Etoupefour (FR); Delpic, Sébastien, 14000 Caen (FR); Vincent, Anne, 14210 Avenay (FR)
(74) Mandataire: Cabinet Plasseraud

(57) **Abrégé**

La présente invention concerne un traitement de données d'interface de consultation de contenus, dans lequel des vignettes correspondant à des contenus respectifs sont affichées sur un écran. En particulier, on prévoit un traitement de données de vignettes pour un affichage en perspective au moins en deux plans, avec :
- une répartition d'un premier groupe de vignettes (V11, ..., V14) en premier-plan, et
- une répartition d'un deuxième groupe de vignettes (V21, ..., V24) en arrière-plan,
et la sélection d'au moins une vignette du deuxième groupe pour un affichage en premier-plan provoque une permutation d'affichage du deuxième groupe en premier-plan et du premier groupe en arrière-plan.

## Description

La présente invention concerne un traitement de données d'interface de consultation de contenus, pour un affichage sur écran d'un dispositif informatique.

Un tel dispositif informatique peut être typiquement, à titre d'exemple, un équipement de visualisation doté de fonctionnalités tactiles tel qu'un écran PC, une tablette PC, un téléphone mobile, ou autres. Bien entendu, le dispositif peut être un poste de télévision susceptible d'afficher (éventuellement ou non par commande d'un terminal de type Set-Top-Box) une interface graphique à disposition d'un utilisateur, lequel peut actionner par exemple des boutons d'une télécommande (haut, bas, gauche, droite, OK).

Les contenus précités peuvent être, à titre d'exemple et sans aucune limitation, des fichiers de données, des instructions d'un programme informatique (pour l'exécution d'une application, d'un jeu, ou autres), des contenus multimédias, des contenus audio et/ou vidéo, des contenus textuels, des contacts d'un carnet d'adresses, etc.

De tels dispositifs peuvent afficher des vignettes correspondant à des contenus respectifs. On entend par « vignette » toute représentation possible d'un contenu, telle que par exemple et à titre non limitatif une imagette représentative d'un contenu audio et/ou vidéo (pochette de disque, affiche de film, ou autre), icone d'un programme, logo, forme quelconque contenant du texte, etc.

De tels équipements affichent aujourd'hui de nombreuses vignettes dans une même page d'écran et la lisibilité de cette dernière devient difficile. Des effets de représentation tridimensionnelle permettent d'atténuer cette difficulté. Par exemple, l'interface graphique « *coverflow »* (Société Apple®) présente l'équivalent de vignettes, avec en particulier :
- une vignette centrale, apparaissant de face en milieu d'écran, et
- deux successions de vignettes latérales, respectivement de part et d'autre de la vignette centrale, apparaissant de côté et en perspective.

Toutefois, ces vignettes sont finalement affichées sous forme de l'équivalent d'une liste comportant un élément central dont une vignette peut être affichée (par exemple la pochette d'un disque de musique avec des informations sur l'auteur et le titre) et des éléments précédent et suivant dans la liste.

Cette disposition ne permet pas un aperçu rapide et ciblé de vignettes particulières, ni une navigation plus aisée entre vignettes.

La présente invention vient améliorer la situation.

Elle propose à cet effet un procédé mis en oeuvre par un dispositif informatique, de traitement de données d'interface de consultation de contenus, dans lequel une pluralité de vignettes correspondant à des contenus respectifs est affichée sur un écran du dispositif.

En particulier, le procédé comporte un traitement de données de vignettes pour un affichage en perspective au moins en deux plans, avec :
- une répartition d'un premier groupe de vignettes en premier-plan, et
- une répartition d'un deuxième groupe de vignettes en arrière-plan,
et la sélection d'au moins une vignette du deuxième groupe pour un affichage en premier-plan provoque une permutation d'affichage du deuxième groupe en premier-plan et du premier groupe en arrière-plan.

Ainsi, l'invention surmonte le problème posé par des interfaces graphiques telles que le « coverflow » d'Apple® qui présente les vignettes finalement sous forme d'une liste comportant un élément central dont une vignette peut être affichée (par exemple la pochette d'un disque de musique avec des informations sur l'auteur et le titre) et des éléments précédents et suivants dans la liste. La présente invention permet d'afficher des vignettes par groupes, tous apparents sur l'écran, ces groupes pouvant être formés selon un critère choisi (par exemple selon un style artistique de contenus multimédias ou autres, comme on le verra plus loin). Ainsi, les vignettes peuvent être regroupées au moins dans les premier et deuxième groupes précités selon un critère choisi, par exemple par application d'un filtre (par ordre alphabétique, par date de contenu, par fréquence d'utilisation du contenu, ou autres).

Préférentiellement, l'affichage en premier-plan et en arrière-plan des vignettes comporte la prise en compte d'un point de fuite, dans une représentation en perspective tridimensionnelle des vignettes. Avantageusement, ce point de fuite peut correspondre à un point central de l'écran du dispositif, ce qui offre une ergonomie intuitive et satisfaisante, de navigation entre des vignettes respectivement de premier-plan et d'arrière-plan.

Dans une réalisation, le procédé comporte un traitement des données de vignettes pour un affichage en au moins trois plans avec :
- une répartition d'un premier groupe de vignettes sensiblement dans un plan proximal selon ladite représentation en perspective,
- une répartition d'un troisième groupe de vignettes sensiblement dans un plan distal selon ladite représentation en perspective, et
- une répartition d'un deuxième groupe de vignettes sensiblement dans un plan intermédiaire entre les plans proximal et distal selon ladite représentation en perspective.

On entend ici par « sensiblement dans un plan » le fait que des vignettes d'un même groupe puissent ne pas être rigoureusement dans un même plan mais plutôt dans des « tranches » de certaine épaisseur, dans l'espace 3D.

La sélection d'au moins une vignette du deuxième groupe pour un affichage en premier-plan peut provoquer une permutation d'affichage du plan intermédiaire en plan proximal, et la sélection d'au moins une vignette du troisième groupe pour un affichage en premier-plan peut provoquer une permutation d'affichage du plan distal en plan proximal.

Ainsi, la sélection d'une vignette pour un affichage en premier-plan provoque finalement l'affichage en premier-plan de son groupe, dans tous les cas. Cette réalisation permet avantageusement de construire les groupes de vignettes selon un critère choisi, tel que par exemple selon un style musical ou encore une catégorie de films (pour des vignettes relatives à des contenus multimédias).

Plus particulièrement, la sélection d'au moins une vignette du deuxième groupe peut avantageusement provoquer en outre :
- une permutation d'affichage du plan distal en plan intermédiaire, et
- une permutation d'affichage du plan proximal en plan distal.

En outre, la sélection d'au moins une vignette du troisième groupe peut provoquer :
- une permutation d'affichage du plan proximal en plan intermédiaire, et
- une permutation d'affichage du plan intermédiaire en plan distal.

Les dimensions d'affichage des vignettes peuvent avantageusement être choisies pour faire apparaître au moins partiellement toutes les vignettes des premier, deuxième et troisième groupes.

Comme on le verra dans des exemples de réalisation ci-après, par cette disposition, il est possible d'afficher au moins une douzaine de vignettes représentant par exemple des couvertures de pochettes de disque sur un écran de résolution correspondant typiquement à celle d'un écran d'ordinateur de type PC ou d'une tablette, voire à celle d'un écran de terminal téléphonique.

Bien entendu, la sélection d'une vignette pour un affichage en premier-plan peut être effectuée par click directement sur la vignette comme on le verra plus loin dans un exemple de réalisation ou, en variante, par actionnement d'un outil de navigation (sélection de flèches haut/bas par exemple, en actionnant la molette d'une souris). Ainsi, dans une réalisation avantageuse de l'invention, un outil de navigation spécifique peut être prévu pour naviguer d'un plan à l'autre, c'est-à-dire d'un groupe de vignettes à l'autre. Un tel outil de navigation permet de « présélectionner » tout un groupe de vignettes pour l'afficher en premier-plan, comme décrit plus loin dans un exemple de réalisation en référence aux figures.

Ainsi, dans une telle réalisation, un outil de navigation est prévu en outre, au moins pour afficher en premier-plan le deuxième groupe de vignettes.

Dans une telle navigation et dans une réalisation où l'on prévoit plus de deux groupes de vignettes, par exemple quatre groupes avec un premier groupe en plan proximal, un deuxième groupe en plan intermédiaire, un troisième groupe en plan distal et un quatrième groupe non affiché, on peut prévoir qu'une navigation du premier groupe vers le deuxième groupe provoque :
- l'affichage du deuxième groupe en plan proximal,
- l'affichage du troisième groupe en plan intermédiaire,
- l'affichage du quatrième groupe en plan distal,
- et la disparition du premier groupe de vignettes de l'écran.

En variante, une permutation entre les groupes des différents plans peut être prévue, sans prévoir un quatrième groupe, comme suit :
- l'affichage du deuxième groupe en plan proximal,
- l'affichage du troisième groupe en plan intermédiaire,
- l'affichage du premier groupe en plan distal,
comme décrit ci-avant.

Un exemple de cette dernière réalisation sera décrit plus loin en référence aux figures.

Dans une réalisation possible de l'invention où l'on prévoit un deuxième type de sélection de vignette pour l'affichage d'informations relatives au contenu correspondant à la vignette sélectionnée, cette sélection d'une vignette du deuxième groupe pour l'affichage des informations relatives au contenu précité peut provoquer en outre une permutation d'affichage du deuxième groupe en premier-plan et du premier groupe en arrière-plan.

Cette caractéristique, bien qu'optionnelle, est avantageuse.

En effet, dans l'interface *« coverflow* » au sens de l'art antérieur, il faut sélectionner l'élément central pour obtenir des détails sur le disque (ensemble des titres du disque, année de copyright, etc.). Plus précisément, il faut d'abord sélectionner un élément précédent ou suivant dans la liste précitée pour le présenter en tant qu'élément central de la liste, puis sélectionner cet élément central pour en obtenir des détails d'informations.

Dans cette réalisation au sens de l'invention, la sélection d'une vignette d'arrière-plan (qui pourrait correspondre à un élément précédent ou suivant dans la liste d'une interface telle que le *« coverflow* ») permet directement d'obtenir à la fois :
- les détails d'informations sur le contenu correspondant à cette vignette, et
- de faire passer cette vignette en premier-plan.

Il peut, bien entendu, être prévu qu'un autre type encore de sélection, par exemple dans un affichage de détails sur le contenu auquel est associée une vignette (par exemple par double-click) provoque la lecture de ce contenu, comme par exemple la lecture d'un contenu multimédia que représente la vignette, ou encore la lecture des instructions d'un programme informatique tel qu'un jeu informatique pour son exécution, ou autres.

D'autres caractéristiques et avantages de l'invention apparaîtront à l'examen de la description détaillée ci-après et des dessins annexés sur lesquels :
- la figure 1 illustre un exemple d'interface proposée à un utilisateur pour consulter des contenus, dans un exemple de réalisation de l'invention ;
- la figure 2 illustre la situation d'une sélection de vignette d'un plan intermédiaire, dans l'exemple de réalisation de la figure 1 ;
- la figure 3 illustre la situation d'une sélection de vignette d'arrière-plan, dans l'exemple de réalisation de la figure 1 ;
- la figure 4 illustre un exemple d'étapes de permutation entre plans, dans l'exemple de réalisation de la figure 1 ;
- la figure 5 illustre schématiquement un dispositif à écran pour la mise en oeuvre de l'invention.

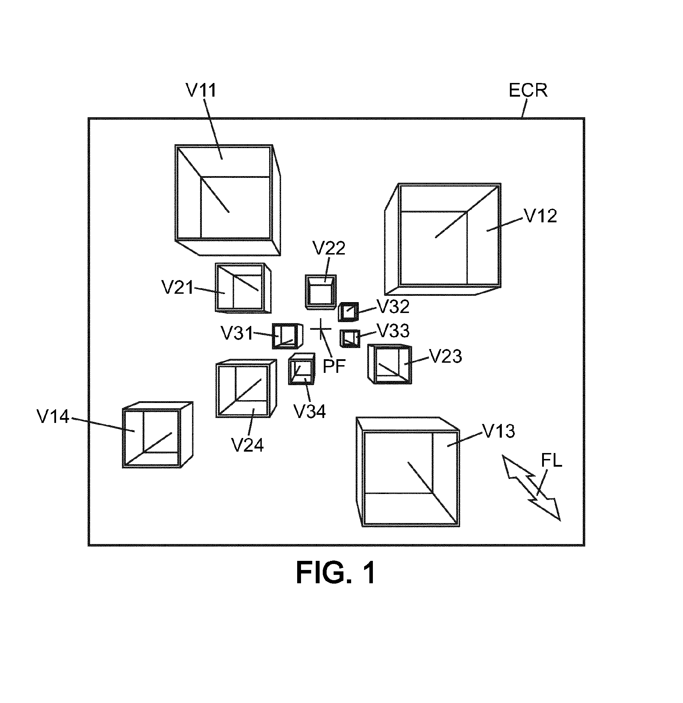

En référence à la figure 1, des vignettes V11, ..., V34 sont affichées sur un écran ECR, par exemple d'une interface tactile d'un équipement tel qu'un terminal mobile. Dans l'exemple décrit, chaque vignette a l'aspect d'un cube représenté en perspective pour conférer un effet 3D à la représentation, avec en particulier un point de fuite PF qui correspond par exemple au centre de l'écran. Ainsi, la représentation de chaque vignette respecte cette perspective avec, dans l'exemple décrit, le même point de fuite PF. On relèvera que les vignettes semblent à des distances différentes d'un observateur de l'écran. Ainsi, dans l'exemple représenté, les vignettes V11, V12, V13 et V14 semblent plus proches que les vignettes V21, V22, V23 et V24, lesquelles semblent elles-mêmes plus proches de l'observateur que les vignettes du fond V31, V32, V33 et V34. On retiendra alors que dans l'exemple représenté :
- un premier groupe de vignettes V11, V12, V13 et V14 sont affichées dans une première tranche entre deux plans perpendiculaires à une ligne de fuite passant par le point PF,
- un deuxième groupe de vignettes V21, V22, V23 et V24 sont affichées dans une deuxième tranche entre deux plans perpendiculaires à une ligne de fuite passant par le point PF et plus lointaine de l'observateur que la première tranche,
- un troisième groupe de vignettes V31, V32, V33 et V34 sont affichées dans une troisième tranche entre deux plans perpendiculaires à une ligne de fuite passant par le point PF et plus lointaine de l'observateur que la deuxième tranche.

Ainsi, la première tranche est en premier-plan, la troisième tranche est en arrière-plan et la deuxième tranche est en « plan intermédiaire ». Pour la clarté de l'exposé ci-après, les première, deuxième et troisième tranches sont dénommées respectivement « premier plan », « deuxième plan » et « troisième plan ».

L'écran présente en outre une flèche de navigation FL pour passer de l'un de ces « plans » à l'autre, selon une permutation d'affichage de ces plans décrite ci-après.

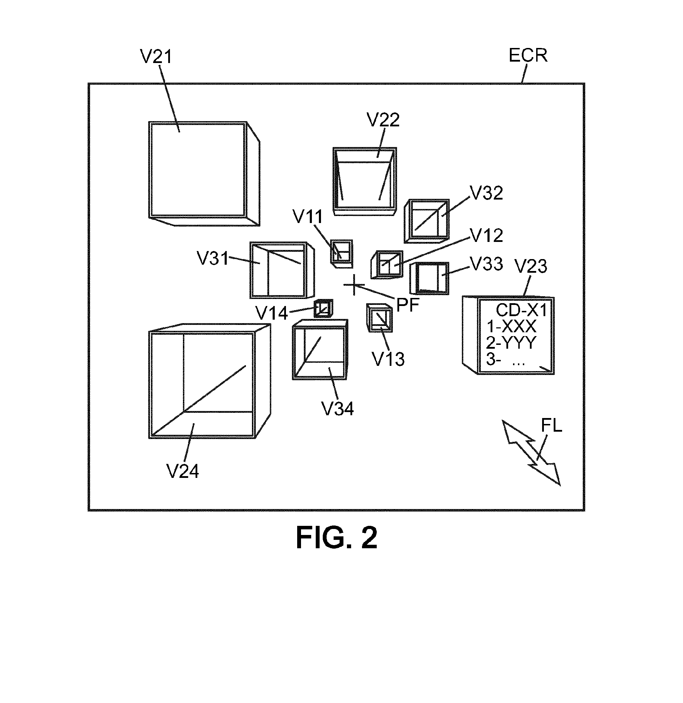

La figure 2 illustre une situation qui fait suite à la sélection d'au moins une vignette qui était située dans le deuxième plan, intermédiaire, de la figure 1 (groupe des vignettes V21 à V24), pour la faire afficher au premier plan. Pour ce faire, la flèche de navigation FL peut être utilisée pour faire passer toutes les vignettes V21 à V24 du deuxième groupe en premier-plan. Dans une variante correspondant à l'exemple représenté, la vignette V23 a été sélectionnée et il peut s'afficher dans l'exemple décrit des détails propres au contenu correspondant à cette vignette. Il peut s'agir par exemple du titre du contenu CD-X1 et de ses différentes pistes (audio pour un CD de musique, ou des séquences vidéo pour un film). Dans l'exemple représenté sur la figure 2, ces données s'affichent dans le cube correspondant à la vignette sélectionnée. Il s'agit d'un exemple de réalisation. Dans une variante, une page comportant ces données peut s'afficher, indépendamment du cube correspondant à cette vignette, laquelle peut néanmoins se présenter au premier plan avec les vignettes de son groupe.

Dans l'exemple représenté, le groupe des vignettes V21 à V24 vient donc prendre le premier plan d'affichage qu'occupait le groupe des vignettes V11 à V14 sur la figure 1. Ce groupe des vignettes V11 à V14 passe alors en arrière-plan (troisième plan de l'exemple représenté) et le groupe des vignettes V31 à V34 vient maintenant occuper le plan intermédiaire (deuxième plan de l'exemple représenté).

Ainsi, la sélection d'au moins une vignette pour son affichage en premier-plan provoque un affichage au premier plan aussi des autres vignettes de son groupe. La navigation entre groupes de vignettes qui s'exécute en actionnant la flèche de navigation FL permet alors de faire permuter les dispositions des plans de vignettes.

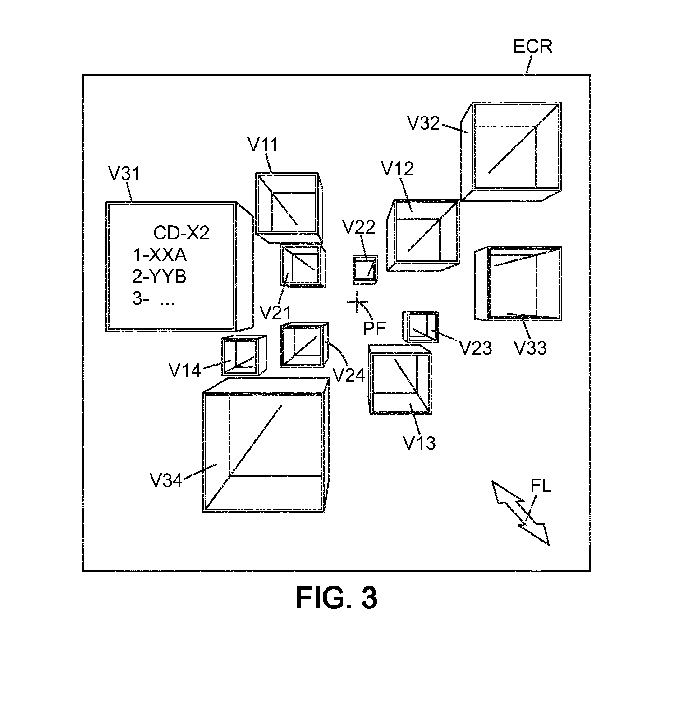

La figure 3 illustre maintenant une situation qui fait suite à la sélection d'au moins une vignette qui était située dans le troisième plan, en arrière-plan de la figure 1 (groupe des vignettes V31 à V34) pour l'afficher en premier-plan. Dans l'exemple représenté, la vignette V31 sélectionnée s'affiche avec des détails propres au contenu correspondant à cette vignette (CD-X2, et les pistes de ce contenu). Le groupe de vignettes V31 à V34 à laquelle appartient la vignette sélectionnée vient donc prendre le premier plan d'affichage qu'occupait le groupe des vignettes V11 à V14 sur la figure 1. Ce groupe des vignettes V11 à V14 passe, dans l'exemple décrit, en plan intermédiaire et le groupe des vignettes V21 à V24 occupe maintenant l'arrière-plan.

Le même type de permutation d'affichage de plans peut s'appliquer par actionnement de la flèche FL « en profondeur » :
- une fois pour passer de la situation de la figure 1 à celle de la figure 2,
- ou deux fois pour passer de la situation de la figure 1 à celle de la figure 3.

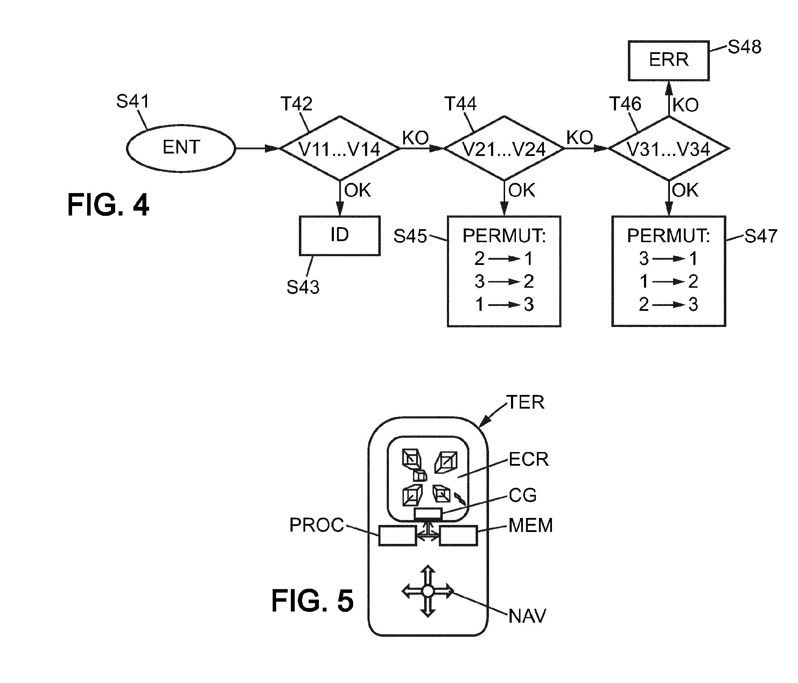

On a résumé les différentes étapes de permutation entre plans, selon ces exemples de réalisation, dans l'illustration correspondant à la figure 4. Ici, suite à une étape d'entrée S41 de sélection d'au moins une vignette (avec affichage de détails par exemple) ou de présélection d'un groupe de vignettes (à l'aide de la flèche de navigation FL), un premier test T42 détermine s'il s'agit d'une sélection d'une vignette du premier groupe en premier-plan V11 à V14 (sélection d'une seule vignette ou présélection de tout le groupe par la flèche FL). Si tel est le cas, aucune permutation de plan n'est menée et les vignettes gardent leur position dans l'écran (étape S43). Sinon, un deuxième test T44 détermine si la vignette sélectionnée (ou le groupe présélectionné) fait partie du deuxième groupe occupant le plan intermédiaire V21 à V24, auquel cas une permutation des plans est menée comme suit (étape S45) :
- le deuxième groupe V21 à V24 vient occuper le premier-plan,
- le troisième groupe V31 à V34 vient occuper le plan intermédiaire, et
- le premier groupe V11 à V14 occupe alors l'arrière-plan.

Si un troisième test T46 détermine plutôt qu'une vignette du troisième groupe V31 à V34 (ou ce troisième groupe) a été sélectionnée à l'étape 41, une permutation des plans est alors menée comme suit (étape S47) :
- le troisième groupe V31 à V34 vient occuper le premier-plan,
- le premier groupe V11 à V14 vient occuper le plan intermédiaire, et
- le deuxième groupe V21 à V24 occupe alors l'arrière-plan.

Si l'entrée de l'étape S41 ne correspond à aucune sélection de vignette ou présélection de groupe (tests T42, T44 et T46 tous négatifs), l'entrée peut être ignorée (étape S48).

On a représenté sur la figure 5 un terminal TER comportant un écran ECR pouvant afficher une telle interface à permutations de plans, pour la mise en oeuvre de l'invention. Il comporte à cet effet, dans un exemple de réalisation, un processeur PROC et une mémoire de travail MEM, pouvant coopérer par exemple avec une carte graphique CG pour, sur commande du processeur PROC, générer un signal vidéo et/ou signal de commande à transmettre à l'écran ECR en vue de commander l'affichage d'une interface de consultation de contenus. Le dispositif constitué par ce terminal peut comporter en outre des boutons de commande NAV (par exemple la molette centrale d'une souris, ou encore, comme représenté à titre d'exemple sur la figure 5, un bouton de navigation dans les quatre directions cardinales), pour la navigation entre vignettes (ou entre groupes de vignettes), ou, en variante, l'écran ECR peut simplement faire partie d'une interface tactile.

Ainsi, la présente invention permet notamment de regrouper les vignettes, par exemple selon un critère préférentiel. Il est par exemple possible d'organiser et de personnaliser l'affichage des contenus, tris, catalogage, etc. Cette interface devient alors un outil qui permet de naviguer rapidement dans un ensemble d'objets représentés dans ces vignettes et d'accéder immédiatement aux contenus.

Chaque vignette est préférentiellement visible dans sa globalité. Elle peut certes être affichée en petites dimensions (du fait de l'effet 3D), mais ces dimensions sont suffisantes pour rendre la vignette facilement reconnaissable et identifiable.

Finalement, cette interface est pilotable par un utilisateur avec un minimum de commandes et peut avantageusement s'adapter à tout type d'équipements (écrans tactiles, à stylet, à crayon laser, ou à partir d'une souris, ou encore à l'aide une simple télécommande de télévision). L'invention favorise donc le confort d'une personne qui utilise l'outil en lequel consiste une telle interface. Bien entendu, la présente invention ne se limite pas à la forme de réalisation décrite ci-avant à titre d'exemple ; elle s'étend à d'autres variantes.

Par exemple, on a représenté trois groupes capables de permuter sur trois plans sur les figures 1, 2 et 3, pour un écran affichant jusqu'à douze vignettes. En variantes, il est possible de prévoir :
- moins de plans (par exemple deux plans) comportant chacun un groupe de six vignettes,
- ou encore plus de plans (par exemple quatre plans) comportant chacun un groupe de trois vignettes, ou un nombre de vignettes variables d'un groupe à l'autre (deux dans un groupe et quatre dans l'autre, par exemple).

Bien entendu, le nombre de vignettes qu'affiche l'écran peut être différent de douze et dépendre par exemple des capacités d'affichage de l'écran.

La forme d'affichage cubique des vignettes, bien qu'intuitive, est présentée ci-avant à titre d'exemple.

On a décrit ci-avant en référence aux figures 2 et 3 un exemple de réalisation dans lequel la sélection d'une vignette pour un affichage de détails sur le contenu auquel est associée la vignette fait passer cette vignette en premier-plan (avec les vignettes de son groupe). Il s'agit bien entendu d'un exemple de réalisation. Dans une variante, chaque vignette d'un plan (y compris en arrière-plan) peut être sélectionnée de sorte que l'utilisateur n'a pas besoin de faire passer une vignette au premier-plan afin de la sélectionner. Dans cette variante, une fois que l'utilisateur a cliqué sur une vignette (notamment une vignette d'arrière-plan), des détails peuvent apparaître dans une fenêtre au premier-plan et une série de commandes peuvent être directement applicables (lancer la lecture d'une piste sélectionnée, par exemple). Toutefois, cette vignette, dans cette réalisation, reste en arrière-plan. L'outil de navigation FL permet en revanche d'afficher en premier-plan un groupe de vignettes d'arrière-plan.

L'invention vise en outre un programme informatique comportant des instructions pour la mise en oeuvre du procédé ci-avant, lorsque ce programme est exécuté par un processeur. A titre d'exemple, l'illustration des étapes du procédé de la figure 4 peut correspondre à l'organigramme d'un algorithme d'un tel programme.

L'invention vise aussi un dispositif informatique (ordinateur, terminal mobile, set-top-box, etc.) équipé de moyens de commande d'affichage d'une interface de consultation de contenus et comportant en particulier des moyens de traitement de données d'interface pour la mise en oeuvre du procédé ci-avant. La figure 5 illustre un exemple d'un tel dispositif. Le dispositif informatique peut être équipé d'un écran, intégré ou non dans le dispositif lui-même, et/ou être conçu pour être connecté à un écran distant, par exemple un écran d'un téléviseur ou d'un type autre équipement interconnectable.

## Revendications

1. Procédé mis en oeuvre par un dispositif informatique, de traitement de données d'interface de consultation de contenus, dans lequel une pluralité de vignettes correspondant à des contenus respectifs est affichée sur un écran du dispositif,
**caractérisé en ce qu'**il comporte un traitement de données de vignettes pour un affichage en perspective au moins en deux plans, avec :
- une répartition d'un premier groupe de vignettes (V11, ..., V14) en premier-plan, et
- une répartition d'un deuxième groupe de vignettes (V21, ..., V24) en arrière-plan,
et **en ce qu'**une sélection d'au moins une vignette du deuxième groupe pour un affichage en premier-plan provoque une permutation d'affichage du deuxième groupe en premier-plan et du premier groupe en arrière-plan.

2. Procédé selon la revendication 1, **caractérisé en ce que** l'affichage en premier-plan et en arrière-plan des vignettes comporte la prise en compte d'un point de fuite (PF), dans une représentation en perspective tridimensionnelle des vignettes.

3. Procédé selon la revendication 2, **caractérisé en ce qu'**il comporte un traitement des données de vignettes pour un affichage en au moins trois plans avec :
- une répartition d'un premier groupe de vignettes (V11, ..., V14) sensiblement dans un plan proximal selon ladite représentation en perspective,
- une répartition d'un troisième groupe de vignettes (V31, ..., V34) sensiblement dans un plan distal selon ladite représentation en perspective, et
- une répartition d'un deuxième groupe de vignettes (V21, ..., V24) sensiblement dans un plan intermédiaire entre les plans proximal et distal selon ladite représentation en perspective.

4. Procédé selon la revendication 3, **caractérisé en ce que** la sélection d'au moins une vignette du deuxième groupe (V23) pour un affichage en premier-plan provoque une permutation d'affichage du plan intermédiaire en plan proximal, et **en ce que** la sélection d'au moins une vignette du troisième groupe (V31) pour un affichage en premier-plan provoque une permutation d'affichage du plan distal en plan proximal.

5. Procédé selon la revendication 3, **caractérisé en ce que** la sélection d'au moins une vignette du deuxième groupe (V21, ..., V24) pour un affichage en premier-plan provoque en outre :
- une permutation d'affichage du plan distal en plan intermédiaire, et
- une permutation d'affichage du plan proximal en plan distal.

6. Procédé selon la revendication 4, **caractérisé en ce que** la sélection d'au moins une vignette du troisième groupe (V31, ..., V34) pour un affichage en premier-plan provoque en outre :
- une permutation d'affichage du plan proximal en plan intermédiaire, et
- une permutation d'affichage du plan intermédiaire en plan distal.

7. Procédé selon l'une des revendications 3 à 6, **caractérisé en ce que** les dimensions d'affichage des vignettes sont choisies pour faire apparaître au moins partiellement toutes les vignettes des premier, deuxième et troisième groupes.

8. Procédé selon l'une des revendications précédentes, dans lequel un deuxième type de sélection d'une vignette provoque l'affichage d'informations relatives au contenu correspondant à la vignette sélectionnée, **caractérisé en ce qu'**une sélection du deuxième type d'au moins une vignette du deuxième groupe provoquant l'affichage desdites informations (CD-X1 ; CD-X2) provoque en outre une permutation d'affichage du deuxième groupe en premier-plan et du premier groupe en arrière-plan.

9. Procédé selon l'une des revendications précédentes, dans lequel le dispositif informatique comporte un outil de navigation (FL) entre vignettes, **caractérisé en ce qu'**une activation de l'outil de navigation (FL) pour une navigation entre groupes de vignettes provoque au moins l'affichage du deuxième groupe en premier-plan.

10. Procédé selon l'une des revendications précédentes, **caractérisé en ce que** les vignettes sont regroupées au moins dans lesdits premier et deuxième groupes selon un critère choisi.

11. Dispositif informatique équipé de moyens de commande (PROC, CG) d'affichage d'une interface (CG) de consultation de contenus, **caractérisé en ce qu'**il comporte des moyens de traitement (PROC, MEM) de données d'interface pour la mise en oeuvre du procédé selon l'une des revendications précédentes.

12. Programme informatique comportant des instructions pour la mise en oeuvre du procédé selon l'une des revendications 1 à 10, lorsque ce programme est exécuté par un processeur (PROC).
